# EUROPEAN PATENT APPLICATION

(11) **EP 4 715 695 A1**
(43) Date of publication of application: **25.03.2026**
(21) Application number: 24315432.5
(22) Date of filing: 23.09.2024
(51) Int. Cl.: G06Q 10/04, G06Q 30/0283, G06Q 50/06, H04L 67/12

(54) **SYSTEM FOR THE MANAGEMENT OF ELECTRICAL ENERGY IN AN ELECTRICAL INSTALLATION AND IMPLEMENTATION METHOD OF SUCH A SYSTEM**

(71) Applicant: HAGER-ELECTRO SAS, 67210 Obernai (FR)
(72) Inventor: Baumann, Eric, 67610 LA WANTZENAU (FR); Helfter, Marc, 67114 ESCHAU (FR); Duvernelle, Christophe, 67500 HAGUENAU (FR); Wilhelm Dillier, Teddy, 67000 STRASBOURG (FR); Bienert, Florian, 67290 LOHR (FR); Reiner, Ulrich, 67691 HOCHSPEYER (DE); Raubuch, Sebastian, 66663 MERZIG (DE); Burkhart, Jan, 66440 BLIESKASTEL (DE); Klag, Johannes, 66440 BLIESKASTEL (DE); Weinard, Christian, 66740 SAARLOUIS (DE); Hoffmann, Axel, 57200 SARREGUEMINES (FR); Debree, Alexander, 66539 NEUNKIRCHEN (DE)
(74) Representative: Ipsilon

(57) **Abstract**

The invention concerns a system for the management of electrical energy in an electrical installation (2) of a building, wherein the system comprises:
- a terminal (1) connected to the electrical installation through the electricity meter (21) and/or the distribution board (22) and configured to identify the detailed electrical consumption of the building over time,
the system further comprising:
- a database (131) comprising at least one parameter defining the pending consumption model of the building,
- a first calculation device (14) to determine the consumption costs and/or the CO2 emissions and/or the grid dependency of the building,
- a second calculation device (15) comprising an algorithm to generate an alternative consumption model corresponding to an upgrade of the building,
- a third calculation device (16) arranged to evaluate the consumption costs and/or the CO2 emissions and/or the grid dependency of the building based on the alternative consumption model.

## Description

The present invention relates to the field of electrical installations of buildings and more particularly to the field of a system arranged to operate a management of the electrical energy distributed by such electrical installations.

Optimization of the energy has become a growing problem. Electrical energy is no exception to this situation. For individuals or professionals installed in a building or in a portion of a building, such optimization of the electrical energy is particularly important at least to limit the costs relative to energy consumption. Some solutions as detailed in publication GB2597342 have been developed to make the distribution of energy flexible by the prediction of the energy usages and, based on the prediction of the scheduling of the energy usages, the coordination of the distribution of available energy resources to meet the energy needs and reach requested performances. However, these solutions are mainly focused on the management of electrical energy resources in the existing installation of the building so that these solutions are limited in the optimization of the electrical energy management by not being able to react to updated technical or legal restriction in the use of these energy resources or even to consider the efficiency of alternative technical installation.

The present invention aims to overcome these drawbacks of the prior art by proposing a solution based on a system able to easily manage the distribution of electrical energy resources in the existing installations of buildings and further able to optimize the management of the electrical energy resources by the identification of adjustments at levels other than that of the sole distribution of electrical energy.

The invention thus aims a system for the management of electrical energy in an electrical installation, characterized in that the system comprises:
- a terminal comprising: .
- an electrical connection with the electrical installation of at least one part of a building through the electricity meter and/or the distribution board of the electrical installation,
- an interface configured to identify the detailed electrical consumption of the at least one part of the building over the time,
the system further comprising:
- a memory means with a database comprising the value of at least one parameter of the at least one part of the building and/or the value of at least one parameter defining the pending consumption model of the at least one part of the building,
- a first calculation device in connection with the memory means and the database to determine, on the basis of the consumption model, at least the consumption costs and/or the CO2 emissions of the consumed electrical energy and/or the grid dependency of the at least one part of the building,
- a second calculation device in connection with the memory means and the database comprising the pending consumption model, the second calculation device comprising an algorithm to generate at least one alternative consumption model corresponding to an upgrade of the at least one part of the building wherein the at least one alternative consumption model comprises a modified value of at least one parameter of the pending consumption model,
- a third calculation device in connection with a memory means with a database comprising the at least one alternative consumption model of the at least one part of the building, the third calculation device being arranged to provide an evaluation of the consumption costs and/or the CO2 emissions of the consumed electrical energy and/or the grid dependency of the at least one part of the building based on the at least one alternative consumption model.

Additionally, the invention concerns an implementation method for the system according to the invention, characterized in that the method comprises:
- a step of identifying the pending consumption model of the at least one part of the building wherein the terminal of the system is connected to the electrical installation,
- a step of identifying at least one potentially adjustable parameter value of the pending consumption model,
- a step of linking the at least one potentially adjustable parameter value with a particular tariffication pattern and/or at least one particular component missing in the electrical installation,
- a step of generating at least one alternative consumption model considering an application of the tariffication pattern and/or an integration of the particular component in the electrical installation of the at least one part of the building,
- a step of evaluating the consumption of the at least one part of the building on the basis of the at least one alternative consumption model.

The invention further concerns a set comprising an electrical installation of a building characterized in that the installation is connected to a system according to the invention so that the terminal of the system is installed between the electricity meter and/or the distribution board of the electrical installation.

The invention will be better understood, thanks to the following description, which relates to preferred embodiments, given as a non-limiting example, and explained with reference to the attached schematic drawings, in which:

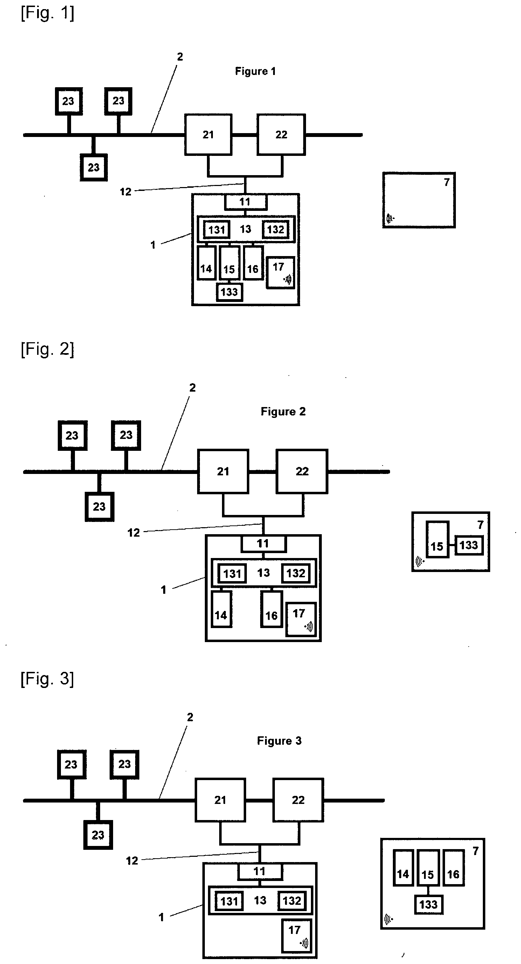

[Fig. 1] represents a schematic illustration of a first example of an arrangement of the system of the invention,
[Fig. 2] represents a schematic illustration of a second example of an arrangement of the system of the invention,
[Fig. 3] represents a schematic illustration of a third example of an arrangement of the system of the invention,
[Fig. 4] represents schematic diagrams illustrating an example of the evaluation of the optimization of the consumption of a part of a building on the basis of an alternative consumption model wherein the electrical installation is completed by an electrical energy storage device.

The invention concerns a system for the management of electrical energy in an electrical installation 2, characterized in that the system comprises:
- a terminal 1 comprising:
- an electrical connection 12 with the electrical installation 2 of at least one part of a building through the electricity meter 21 and/or the distribution board 22 of the electrical installation 2,
- an interface 11 configured to identify the detailed electrical consumption of the at least one part of the building over the time,
the system further comprising:
- a memory means 13 with a database 131 comprising the value of at least one parameter of the at least one part of the building and/or the value of at least one parameter defining the pending consumption model of the at least one part of the building,
- a first calculation device 14 in connection with the memory means 13 and the database 131 to determine, on the basis of the consumption model, at least the consumption costs and/or the CO2 emissions of the consumed electrical energy and/or the grid dependency of the at least one part of the building,
- a second calculation device 15 in connection with the memory means 13 and the database 131 comprising the pending consumption model, the second calculation device 15 comprising an algorithm to generate at least one alternative consumption model corresponding to an upgrade of the at least one part of the building wherein the at least one alternative consumption model comprises a modified value of at least one parameter of the pending consumption model,
- a third calculation device 16 in connection with a memory means 13 with a database 132 comprising the at least one alternative consumption model of the at least one part of the building, the third calculation device 16 being arranged to provide an evaluation of the consumption costs and/or the CO2 emissions of the consumed electrical energy and/or the grid dependency of the at least one part of the building based on the at least one alternative consumption model.

The system of the invention is based on the integration of a terminal 1 in the electrical installation 2 to be managed so that the terminal 1 be able to operate analyses of the electrical consumption and the distribution of electrical flows in the at least one part of the building relative to the electricity meter 21 and/or the distribution board 22 to which the terminal 1 is linked through its electrical connection 12. This terminal 1 is in relation with at least one memory means 13 and calculation devices 14, 15, 16 of the system.

In the system of the invention, the terminal 1 is in connection with a memory means 13 with a database 131 comprising the value of at least one parameter of the at least one part of the building. The terminal 1 is arranged to provide at least part of data or information to the database 131 of the memory means 13. For example, this at least one parameter may correspond to the electrical energy consumption by this at least one part of the building or to the detailed electrical energy consumption over time, like over a day, a week, a month or a year, or the detailed electrical energy consumption considering the type of identified components 23 connected to the electrical installation 2 of the at least one part of the building. These identified components 23 may correspond to domestic components like heating devices, multimedia devices, oven, dishwasher or washing machine. However, these identified components 23 may also correspond to electrical energy generating devices like solar panels, private water turbines or wind turbines. Further, the at least one parameter of the at least one part of the building may include the localization of the building and its proximity to the particular electrical energy production sites. This at least one parameter of the at least one part of the building may also correspond to the type of technology primarily used for the production of electrical energy delivered to this part of the building. Indeed, the electrical energy may be produced according to different technologies and may be based on the combustion of coal, the use renewable energies or the use of nuclear fuel so that the CO2 emissions of the consumed electrical energy of the at least one part of the building may be determined. On the basis of one or several parameters, the consumption model of the at least one part of the building is characterized. The consumption model and its assignation to the at least one part of the building are stored in the memory means 13.

This consumption model associated with the at least one part of the building is used by the first calculation device 14 to determine one or several values relative to the part of the building. These values determined by the first calculation device 14 correspond at least to costs relative to the electrical energy consumption in the part of the building. Further, these values may be the CO2 emissions relative to the type of electrical energy consumed by the part of the building associated with the consumption model and/or the grid dependency of the at least one part of the building considering the ability of the part of the building to produce and stock at least one part of its consumed electrical energy.

This consumption model associated with the at least one part of the building is used by the second calculation device 15 to operate a modification of the value of at least one of the parameters of the consumption model assigned to the at least one part of the building and registered in the memory means 13 and the database 131. Based on this at least one modification of the consumption model, the algorithm of the second calculation device 15 generates a new consumption model. This newly generated consumption model corresponds to an alternative consumption model wherein the at least one amendment in its management of the electrical energy of the at least one part of the building is reflected. The generated alternative consumption model corresponds to a simulation of the behavior of the at least one part of the building where the amendment in its management of electrical energy is conceived. This amendment may concern the planning of the consumption of electrical energy over a day, a week, a month or a year so that the electrical activity in the at least one part of the building over the time is reorganized with deliveries of specific volumes of electrical energy scheduled at given periods of time. Additionally, this amended management may concern the type of components 23 connected to the installation 2 of the at least one part of the building for the consumption of electricity and/or for the production of electrical energy. Further or complementary, this amended management of the electrical energy in the at least one part of the building may concern the type of technology primarily used for the production of electrical energy delivered to the part of the building.

This alternative consumption model assigned to the at least one part of the building having an amended management of its electrical energy, is used by the third calculation device 16 to evaluate/simulate the effects of this amended management on the value of at least the costs of the electrical energy consumption and/or on the value of the CO2 emissions relative to the type of electrical energy consumed and/or the grid dependency of the at least one part of the building with respect to the general electrical network. This third calculation device 16 is connected to the second calculation device 15 directly or through a memory 13 wherein the alternative consumption model generated by the second calculation device 15 is stored.

According to an example relative to a variant of the system of the invention, the second calculation device 15 may further be configured to generate several alternative consumption models each corresponding to a different upgrade to the part of the building. The second calculation device 15 may then determine which of the several alternative consumption models accounts for the highest reduction of costs of the electrical energy consumption and/or the lowest value of the CO2 emissions and/or the lowest grid dependency of the at least one part of the building with respect to the general electrical network.

According to an example relative to a variant of the system of the invention, the first calculation device 14 and/or the second calculation device 15 and/or the third calculation device 16 are one single device. Such construction of the system of the invention limits the number of calculation devices and also the number of components used in the system so that in the event of a malfunction of the system of the invention, replacement of the calculation means is facilitated. Further, in the case of the integration of several calculation devices 14, 15, 16 in the terminal 1, such construction provides a space optimization of this terminal 1.

According to an example relative to another variant of the system of the invention which may be combined with either of the previous detailed variants of the system, the terminal 1 further comprises a remote connection 17 with a centralized computing unit 7, this centralized computing unit 7 comprising at least one of the calculation devices 14, 15, 16 of the system. Such arrangement of the terminal 1 provides a solution to limit the number of components of the system located on site with the terminal 1. This construction of the system allows the sharing of calculation devices 14, 15, 16 between several terminals 1 localized on different sites since these terminals are relative to different parts of one same building or to different buildings. Further, in the event of a malfunction of such a variant of the system of the invention, the replacement of the calculation means is facilitated as the intervention is localized on one single site corresponding to the centralized computing unit 7. Considering complementary construction of this variant of the system of the invention, the centralized computing unit 7 may comprise one or several memory means 13 with a database 131, 132 of the system. Thus, at least one of these databases 131, 132 stored in memory means 13 of the centralized computing unit 7 is fed with data or information from the terminal 1 and provided through its remote connection 17 linked to the centralized computing unit 7.

According to an example relative to another variant of the system of the invention which may be combined with either of the previous detailed variants of the system, the terminal 1 comprises the first calculation device 14 and the third calculation device 16. According to such construction of the system, the first calculation device 14 and the third calculation device 16 are positioned close to the information and data of the at least one part of the building identified by the interface 11 of the terminal 1 and used to by the calculation devices 14, 16 to determine the consumption costs and/or the CO2 emissions of the consumed electrical energy and/or the grid dependency of the at least one part of the building based on the consumption model respectively by each of these calculation devices 14, 16. According to such variant of the system, at least one memory means 13 with at least one of the databases 131, 132 of the system is preferably embedded in the terminal 1. Such construction limits the dependency of the cooperation between the two calculation devices 14, 16 and at least one of the databases 131, 132 on the quality of the remote connection between the terminal 1 and the centralized computing unit 7. According to a preferred specific sub-variant of this variant of the system, the second calculation device 15 comprising an algorithm to generate at least one alternative consumption model, this calculation device 15 is preferably positioned in a centralized computing unit 7. Thus, the algorithm of the centralized computing unit 7 is able to be shared by several terminals 1 so that the update or the adjustment of this algorithm over the time is easier for the maintenance of the system.

According to an example relative to another variant of the system of the invention which may be combined with either of the previous detailed variants of the system, the second calculation device 15 is connected to a database 133 wherein at least one value or at least one value modifier for a parameter of consumption model of at least one part of a building is assigned to at least one component 23 of an electrical installation 2. This at least one value or at least one value modifier is used by the second calculation device 15 to be assigned to the pending consumption model relative to the at least one part of a building and to generate at least one alternative consumption model reflecting the upgrade of the electrical installation 2 of the at least one part of a building. This upgrade of the electrical installation 2 may correspond to the withdrawal or the substitution of at least one of the components 23 among components consuming electrical energy like domestic components. Additionally, this upgrade of the electrical installation 2 may correspond to the addition of at least one component 23 corresponding to an electrical energy generating device, such as a solar panel or the like. Additionally, this upgrade of the electrical installation 2 may correspond to the addition of an energy storage system to the part of the building, the addition of a heat pump to the part of the building, replacing an existent heating system by a heat pump in the part of the building, enlarging an existing solar panel in the part of the building, the addition of a electric vehicle supply equipment (EVSE) to the part of the building and/or an addition of an energy management system to the part of the building. For each of the component 23 or group of components 23, a value or a value modifier is assigned so that at least one parameter of the consumption model may be amended for the generation of at least one alternative consumption model for the at least one part of a building. The database 133 wherein the at least one value or at least one value modifier is stored is arranged to be regularly updated, for example remotely or from the centralized computing unit 7, so that the at least one value or at least one value modifier for the parameters of the consumption model is able to be revised for the generation of more relevant alternative consumption models by the algorithm of the second calculation device 15.

According to an example relative to another variant of the system of the invention which may be combined with either of the previous detailed variants of the system, the second calculation device 15 is connected to a database 133 wherein at least one value or at least one value modifier for a parameter of consumption model of at least one part of a building is assigned to at least one tariffication pattern. This at least one value or at least one value modifier is used by the second calculation device 15 to be assigned to the pending consumption model relative to the at least one part of a building and to generate at least one alternative consumption model considering at least one amendment of the tariffication pattern used by the electrical energy provider. This amendment of the tariffication pattern may correspond to a modification of the price of the energy or a modification of the energy pricing schedule over time, for example during the day, during the week, the month or a year. This amendment of the tariffication pattern may correspond to the addition or removal of periods with a specific energy price in the pricing schedule. Thus, based on this amended tariffication pattern, for each of the periods over time, a value or a value modifier is assigned to the electrical energy consumption so that at least one parameter of the consumption model may be amended for the generation of at least one alternative consumption model relative to the at least one part of a building. The database 133 wherein the at least one value or at least one value modifier is stored is arranged to be regularly updated, for example remotely or from the centralized computing unit 7, so that the at least one value or at least one value modifier of the parameters of the consumption model is able to be revised for the generation of more relevant alternative consumption models by the algorithm of the second calculation device 15.

According to an example relative to another variant of the system of the invention which may be combined with either of the previous detailed variants of the system, the third calculation device 16 is arranged to compare its evaluation based on the at least one alternative consumption model with the results provided by the first calculation device 14 on the basis of the pending consumption model. Once the third calculation device 16 has identified the effects of this amended management on the value of at least the costs of the electrical energy consumption and/or on the value of the CO2 emissions relative to the type of electrical energy consumed and/or the grid dependency of the at least one part of the building with respect to the general electrical network, the effects of this amended management of the electrical energy are compared to the values provided by the first calculation device 14 on the basis of the pending consumption model associated with the at least one part of the building.

The invention also concerns an implementation method for the system according to the invention, characterized in that the method comprises:
- a step of identifying the pending consumption model of the at least one part of the building wherein the terminal 1 of the system is connected to the electrical installation 2,
- a step of identifying at least one potentially adjustable parameter value of the pending consumption model,
- a step of linking the at least one potentially adjustable parameter value with a particular tariffication pattern and/or at least one particular component 23 missing in the electrical installation 2,
- a step of generating at least one alternative consumption model considering an application of the tariffication pattern and/or an integration of the particular component 23 in the electrical installation 2 of the at least one part of the building,
- a step of evaluating the consumption of the at least one part of the building on the basis of the at least one alternative consumption model.

According to an example relative to a variant of the implementation method of the invention, the method may further comprise a step of generating several alternative consumption models each corresponding to a different upgrade to the part of the building. The method may then further comprise a step of determining which of the several alternative consumption models accounts for the highest reduction of costs of the electrical energy consumption and/or the lowest value of the CO2 emissions and/or the lowest grid dependency of the at least one part of the building with respect to the general electrical network. In this case, the method comprises a step of evaluating the consumption of the at least one part of the building on the basis of the at least one alternative consumption model accounting for the highest reduction of costs, the lowest value of CO2 emissions and/or the lowest grid dependency.

According to an example relative to a variant of the implementation method of the invention which may be combined with either of the previous detailed variants of the system, the method further comprises:
- a step of comparing the consumption and the relative costs based on the at least one alternative consumption model with respect to the consumption and the relative costs based on the pending consumption model or the alternative consumption model accounting for the highest reduction of costs, the lowest value of CO2 emissions and/or the lowest grid dependency,
- a step of warning about the relevance of the alternative consumption model and the tariffication pattern and/or of the alternative consumption model accounting for the highest reduction of costs and/or the lowest value of CO2 emissions and/or the lowest grid dependency and/or the at least one particular component 23 relative to the alternative consumption model.

Depending on the results of this comparison and the benefits of the amended management of the electrical energy, necessary modifications corresponding to the upgrade which would make it possible to reach the optimization of the management of the electrical energy are identified. The relevance of these necessary modifications is verified considering the ability of the at least one part of the building to support such necessary upgrade, and at least one part of these necessary modifications is suggested to the consumer located in the at least one part of the building. Considering the results of the verification of the relevance of each of these necessary modifications, the latter may be prioritized and listed according to their efficiency for the optimization of the management of the electrical energy.

According to an example relative to another variant of the implementation method of the invention which may be combined with either of the previous detailed variants of the implementation method, the method further comprises:
- a step of updating the potentially adjustable parameters of consumption models, and/or
- a step of updating the particular tariffication patterns and/or the particular components 23 linkable to potentially adjustable parameters of consumption models.
Preferably, these updating steps are operated remotely from a centralized computing unit 7.

The invention also concerns a set comprising an electrical installation 2 of a building characterized in that the installation 2 is connected to a system according to the invention so that the terminal 1 of the system is installed between the electricity meter 21 and/or the distribution board 22 of the electrical installation 2.

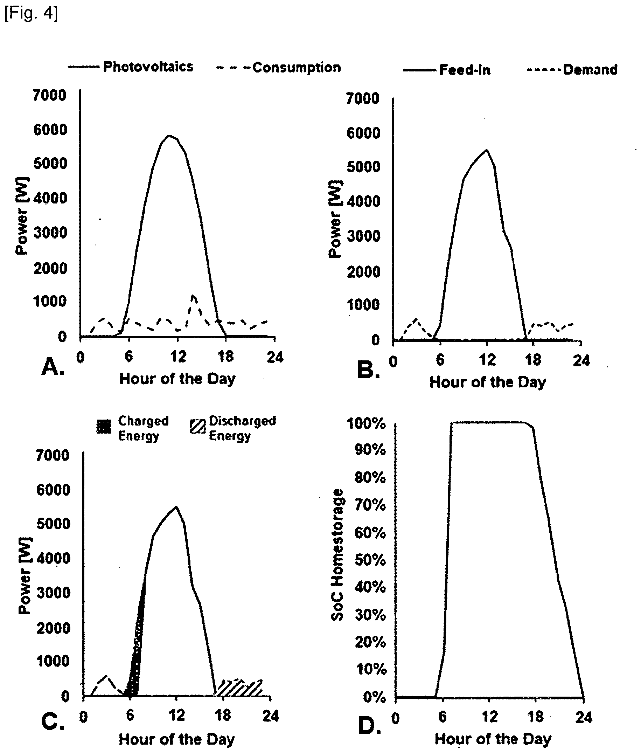

According to the example illustrated on figure 4, the pending consumption model of an electrical installation 2 comprising solar panels is partly shown on picture A. Complementary data of the pending consumption model shown on picture B, indicate that, over a twenty-four-hour period, a part of the consumed electrical energy in the corresponding building is taken from the grid while a part of the energy produced by the solar panels is injected into the electrical network. The pending consumption model estimates that such installation supplied with its own photovoltaic energy (PV) provides an autarky in electrical energy to the corresponding building by 60% with a grid demand of about 4 kWh and a consumption of the self-produced energy of about 6 kWh so that the total amount of consumed electrical energy is about 10kWh. An alternative consumption model based on this pending consumption model has been generated by the second calculation device 15. According to this alternative consumption model, the electrical installation 2 is conceived with an additional electrical energy storage device arranged to cooperate with the solar panels. The electrical energy produced by the solar panels and the electrical energy consumed in the corresponding building are not modified by the new storage device added to the electrical installation. As shown on picture C, a part of the energy produced by the solar panels and originally injected into the electrical network can be used to charge the storage device and a part of the energy originally provided by the grid is discharged from the storage device. Such alternative consumption model estimates the autarky in electrical energy of the building by 85% wherein the grid demand is reduced to around 1,5 kWh and the consumption of the self-produced energy is increased to 8,5 kWh. This alternative consumption model estimates such optimization of the consumption on the basis of the variation of the state of charge (SoC) of the electrical energy storage device potentially installed in the electrical installation 2 shown on picture D, considering its cooperation with the electrical energy supplied from the solar panels. Since the power generated at home by solar panels is considered carbon neutral, the CO2 emissions can be calculated from the amount of energy retrieved from the electrical network or grid and the amount of carbon emitted by the electricity provider for the energy provided. Hence, the observed alternative consumption model provides a reduction of CO2 emissions by 62,5 % and an increase in autarky by 41,67 %.

It must be noticed that the second calculation device 15 may generate further alternative consumption models based on the addition of a different energy storage system with a different/higher battery capacity than the energy storage system according to the previous alternative consumption model, the addition of an Electric Vehicle Supply Equipment to the home, the addition of further solar panels to the home, etc.

After the generation of those further alternative consumption models by the second calculation device 15, the alternative consumption model amongst the generated alternative consumption models corresponding to a predefined criterion can be determined so that alternative consumption models permitting the most reduction in CO2 emissions and/or the highest increase in autarky and/or the most reduction in electricity costs can be calculated and the upgrade corresponding to said alternative consumption model may be suggested to a user.

Of course, the invention is not limited to the embodiments described and shown in the attached drawings. Modifications remain possible, in particular from the point of view of the constitution of the various elements or by substitution of technical equivalents, without departing from the scope of protection of the invention.

## Claims

1. System for the management of electrical energy in an electrical installation (2), **characterized in that** the system comprises:
- a terminal (1) comprising:
- an electrical connection (12) with the electrical installation (2) of at least one part of a building through the electricity meter (21) and/or the distribution board (22) of the electrical installation (2),
- an interface (11) configured to identify the detailed electrical consumption of the at least one part of the building over the time,
the system further comprising:
- a memory means (13) with a database (131) comprising the value of at least one parameter of the at least one part of the building and/or the value of at least one parameter defining the pending consumption model of the at least one part of the building,
- a first calculation device (14) in connection with the memory means (13) and the database (131) to determine, on the basis of the consumption model, at least the consumption costs and/or the CO2 emissions of the consumed electrical energy and/or the grid dependency of the at least one part of the building,
- a second calculation device (15) in connection with the memory means (13) and the database (131) comprising the pending consumption model, the second calculation device (15) comprising an algorithm to generate at least one alternative consumption model corresponding to an upgrade of the at least one part of the building wherein the at least one alternative consumption model comprises a modified value of at least one parameter of the pending consumption model,
- a third calculation device (16) in connection with a memory means (13) with a database (132) comprising the at least one alternative consumption model of the at least one part of the building, the third calculation device (16) being arranged to provide an evaluation of the consumption costs and/or the CO2 emissions of the consumed electrical energy and/or the grid dependency of the at least one part of the building based on the at least one alternative consumption model.

2. System according to claim 1, **characterized in that** the first calculation device (14) and/or the second calculation device (15) and/or the third calculation device (16) are one single device.

3. System according to claims 1 and 2, **characterized in that** the terminal (1) further comprises a remote connection (17) with a centralized computing unit (7), this centralized computing unit (7) comprising at least one of the calculation devices (14, 15, 16) of the system.

4. System according to any of the previous claims, **characterized in that** the terminal (1) comprises the first calculation device (14) and the third calculation device (16).

5. System according to any of the previous claims, **characterized in that** the second calculation device (15) is connected to a database (133) wherein at least one value or at least one value modifier for a parameter of consumption model of at least one part of a building is assigned to at least one component (23) of an electrical installation (2).

6. System according to any of the previous claims, **characterized in that** the second calculation device (15) is connected to a database (133) wherein at least one value or at least one value modifier for a parameter of consumption model of at least one part of a building is assigned to at least one tariffication pattern.

7. System according to any of the previous claims, **characterized in that** the third calculation device (16) is arranged to compare its evaluation based on the at least one alternative consumption model with the results provided by the first calculation device (14) on the basis of the pending consumption model.

8. Implementation method for the system according to claims 1 to 7, **characterized in that** the method comprises:
- a step of identifying the pending consumption model of the at least one part of the building wherein the terminal (1) of the system is connected to the electrical installation (2),
- a step of identifying at least one potentially adjustable parameter value of the pending consumption model,
- a step of linking the at least one potentially adjustable parameter value with a particular tariffication pattern and/or at least one particular component (23) missing in the electrical installation (2),
- a step of generating at least one alternative consumption model considering an application of the tariffication pattern and/or an integration of the particular component (23) in the electrical installation (2) of the at least one part of the building,
- a step of evaluating the consumption of the at least one part of the building on the basis of the at least one alternative consumption model.

9. Implementation method according to claim 8, **characterized in that** the method further comprises:
- a step of comparing the consumption and the relative costs based on the at least one alternative consumption model with respect to the consumption and the relative costs based on the pending consumption model or the alternative consumption model accounting for the highest reduction of costs and/or the lowest value of CO2 emissions and/or the lowest grid dependency,
- a step of warning about the relevance of the alternative consumption model and the tariffication pattern and/or of the alternative consumption model accounting for the highest reduction of costs and/or the lowest value of CO2 emissions and/or the lowest grid dependency and/or the at least one particular component (23) relative to the alternative consumption model.

10. lmplementation method according to claims 8 or 9, **characterized in that** the method further comprises:
- a step of updating the potentially adjustable parameters of consumption models, and/or
- a step of updating the particular tariffication patterns and/or the particular components (23) linkable to potentially adjustable parameters of consumption models.

11. Set comprising an electrical installation (2) of a building **characterized in that** the installation (2) is connected to a system according to the invention so that the terminal (1) of the system is installed between the electricity meter (21) and/or the distribution board (22) of the electrical installation (2).
